# EUROPÄISCHE PATENTSCHRIFT

(11) **EP 2 486 986 B1**
(45) Veröffentlichungstag und Bekanntmachung des Hinweises auf die Patenterteilung: **28.08.2013**
(21) Anmeldenummer: 12166716.6
(22) Anmeldetag: 28.02.2011
(51) Int. Cl.: B07B 4/02, B07B 4/06, B07B 11/06, B07B 15/00, B65G 47/72, B65G 47/80

(54) **Verteilvorrichtung mit Verteilertellern**
Distribution device with distribution plates
Dispositif de répartition avec plateaux de distribution

(30) Priorität: 19.03.2010 DE 102010012200; 30.04.2010 DE 102010016735
(43) Veröffentlichungstag der Anmeldung: 15.08.2012
(62) Teilanmeldung aus: 11156255.9
(73) Patentinhaber: Westeria Fördertechnik GmbH, 48346 Ostbevern (DE)
(72) Erfinder: Westbrock, Bernhard, 48291 Telgte (DE)
(74) Vertreter: Habbel, Ludwig

(56) Entgegenhaltungen:
- DE-A1- 3 223 764
- DE-C- 916 517
- DE-U1- 8 606 061
- FR-A2- 2 532 344
- GB-A- 1 049 352

## Beschreibung

Die Erfindung betrifft eine Verteilvorrichtung, die im Bereich der Abfallwirtschaft einsetzbar ist und einen Drehteller aufweist. Die Verteilvorrichtung kann einem ersten Förderorgan nachschaltet angeordnet werden, welches eine Abfallmischung führt.

Aus der JP 2002 192 078 A ist ein Windsichter bekannt, bei dem das von einem Förderband herangeführte Gut auf einen Drehteller fällt, bevor es, von dem Drehteller herabfallend, von einem Gebläse erfasst und unterschiedlich weit durch die Luft transportiert wird. Ein mechanisches Bauteil, wie z. B. eine Sichttrommel, ist hinter dem Drehteller nicht vorgesehen, denn ausdrücklich sollen weniger mechanische Komponenten als im bekannten Stand der Technik verwendet werden und ein geringerer Verbrauch an elektrischer Energie erzielt werden. Daher sind lediglich mehrere Auffangbehälter vorgesehen, die in Blasrichtung des Gebläses hintereinander angeordnet sind, so dass je nach Flugweite die unterschiedlichen Bestandteile der Materialmischung voneinander getrennt werden.

Ein ähnlicher Vorschlag, jedoch ohne das erwähnte Gebläse, ist aus der FR 978 008 A bekannt: Aus einem vertikalen Rohr tritt die Materialmischung unten aus, gerät auf einen liegenden Drehteller und wird von diesem nach außen geschleudert. Unterschiedliche Materialien fliegen unterschiedlich weit. In unterschiedlichen Abständen zum Drehteller sind mehrere Auffangbehälter vorgesehen, so dass je nach Flugweite die unterschiedlichen Bestandteile der Materialmischung voneinander getrennt werden.

Aus der DE 86 06 061 U1 ist eine Vorrichtung zum feinverteilten Einstreuen von Gut in den Sichtraum eines Windsichters bekannt, wobei die Verteilvorrichtung zwei übereinander auf derselben Drehachse angeordnete Drehteller mit unterschiedlichen Durchmessern aufweist, die innerhalb eines Zyklons angeordnet sind.

Aus der DE 195 01 263 A1 ist eine Vorrichtung zur Sichtung eines Materialien-Gemisches bekannt, bei der das von einem Förderband herangeführte Gut auf eine Rüttelplatte fällt, bevor es von einem Gebläse erfasst und unterschiedlich weit durch die Luft transportiert wird, über ein zweites Förderband hinweg. Schwere Bestandteile des Gutes bleiben auf dem zweiten Förderband liegen, während die leichten Bestandteile über das zweite Förderband hinweg geblasen werden. Oberhalb des Förderbandes kann ein Sauggebläse vorgesehen sein, welches die leichten Bestandteile anhebt und abführt. Die Rüttelplatte dient dazu, das Materialien-Gemisch flächig zu verteilen

Aus der DE 10 2007 013 185 A1 ist eine Streuanordnung an einem Fahrzeug bekannt, wie sie zum Ausbringen von Streugut vorgesehen ist, wobei das Streugut mittels eines Streutellers großflächig verteilt wird. Das zugeführte Material ist üblicherweise homogen, wie dies aus der Praxis beispielsweise beispielsweise von Streusalz, Düngemittel oder dergleichen bekannt ist. Der Streuteller selbst ist plan ausgestaltet. Eine Verstellung des Streutellers ermöglicht eine Anpassung des erzielbaren Streubildes an das jeweils verwendete und zu verstreuende Material. So sind z. B. als Streuschaufeln bezeichnete Mitnehmer auf dem Streuteller vorgesehen, die verschiebbar sind und dementsprechend unterschiedlich eingestellt werden können. Diese Druckschrift betrifft nicht die Abfallwirtschaft, die zum Trennen einer inhomogenen Materialmischung geeignet wäre.

Aus der DE 32 23 764 A1 ist eine Vorrichtung zum Ausstreuen von körnigem und / oder pulverigem Gut, insbesondere Kunstdünger oder Saatgut, bekannt. Auch hier lassen sich die verwendeten als Schleuderscheiben bezeichneten Drehteller, die das Material großflächig verteilen, in Anpassung an das jeweils verwendete Material in ihrer Neigung einstellen. Ein Vorratsbehälter ist an seinem Boden zu zwei Vorratstrichtern ausgeformt, und jeder Vorratstrichter weist einen Auslass auf. Zwei Drehteller sind voneinander beabstandet angeordnet, nämlich jeweils einer unter jedem Auslass, so dass die beiden Drehteller nicht miteinander zusammenwirken. Die Drehteller sind plan ausgestaltet, weisen also eine ebene Oberfläche auf, auf welche das zu verteilende Gut auftrifft. Streifenförmige Leitflächen sind als Mitnehmer auf der mit dem Material in Kontakt kommenden Oberfläche der Schleuderscheiben vorgesehen. Auch diese Druckschrift betrifft nicht die Abfallwirtschaft und gibt Anregung für eine Verteilvorrichtung , die zum Trennen einer inhomogenen Materialmischung geeignet wäre. Die Verteilvorrichtung gemäß DE 3223764 wird als nächstliegender Stand der Technik angesehen.

Auch aus der GB 1 049 352 A ist eine Vorrichtung zum Ausstreuen von mineralischem Dünger bekannt. Diese Vorrichtung weist zwei flache Drehteller auf, die im wesentlichen in derselben Ebene angeordnet sind. Um einander überlappende Wirkbereiche von streifenförmige Leitflächen zu ermöglichen, die als Mitnehmer auf den beiden Drehtellern vorgesehen sind, können die Mitnehmer auf den beiden Drehtellern versetzt zueinander angeordnet sein, ähnlich wie zwei Zahnräder, oder die Drehteller können an ihrem äußeren Umfang, nämlich in dem Überlappungsbereich, Aussparungen oder einen Höhenversatz aufweisen.

Aus der FR 2 532 344 A2 ist eine Verteilvorrichtung bekannt, die von einem Transportband herangeführtes Gut innerhalb eines Bunkers mittels eines Drehtellers verteilt

Aus der DE 916 517 C ist eine Vorrichtung zum Verteilen von Schüttgut von einer Aufgabestelle aus auf mehrere gleichartige Verteilungsstellen, z. B. auf Siebe, Brecher, Mischer oder Ofenkammern bekannt. Um eine möglichst gleiche Kornverteilung des Schüttguts für alle Verteilungsstellen zu gewährleisten, ist zwischen einem ersten Förderorgan - z. B. einem Förderband - und den Verteilungsstellen ein Drehteller vorgesehen, der vom ersten Förderorgan herabfallendes Schüttgut vergleichmäßigen soll.

In der Abfallwirtschaft besteht daher das Problem, Abfall von einem ersten Förderorgan, beispielsweise einem Transportband vorgegebener Breite, auf eine größere Breite zu verteilen. Dabei kann es sich um eine Abfallmischung aus Komponenten unterschiedlichen Materials und ggf. unterschiedlichen spezifischen Gewichts handeln, oder um eine demgegenüber homogenere Abfallmenge.

Aus der Praxis ist es beispielsweise bekannt, die Verteilung mit Hilfe von Verteilschurren oder mit Hilfe von Förderrinnen durchzuführen. Die Verteilschurren werden dabei mit Kaskaden bestückt, um eine Verteilung zu erwirken. Die Kaskaden können jedoch nur bei bestimmten Materialien eingesetzt werden, wenn beispielsweise folienartige Produkte aufgegeben werden, so bleiben diese häufig an den Kaskaden hängen. Zudem ist für die Anordnung derartiger Kaskaden eine sehr große Übergabehöhe erforderlich, die in vielen praxisüblichen Abfallsortieranlagen nicht gegeben ist. Wenn jedoch der für die entsprechenden Kaskaden erforderliche Bauraum nicht verfügbar ist, so können die Kaskaden nur mit eingeschränkter Funktionalität verwirklicht werden und dementsprechend das Material der Abfallmischung nicht auf die gewünschte, möglichst große Breite verteilen.

Die alternativ eingesetzten Förderrinnen sind schräg angeschnitten, um eine Verteilung auf eine größere Breite zu ermöglichen. Nachteilig ist dabei der große Platzbedarf, da sich der Schrägschnitt der Förderrinnen über eine große Länge erstreckt. Zudem neigen derartig schräg angeschnittene Förderrinnen zu Anbackungen. Eine rechtwinklige Übergabe von einem ersten auf ein zweites Förderorgan ist zudem schwierig. Wenn das Abfallmaterial auf eine Nutzbreite von beispielsweise 3.000 mm verteilt werden soll, so ist bei der Verwendung von Förderrinnen eine Rinnenlänge von etwa 6.000 mm erforderlich, was die Aufstellung einer entsprechenden Windsichter-Anlage entweder erschwert oder angesichts vorgegebener Platzverhältnisse unmöglich macht, jedenfalls mit einer dementsprechend großen Breite des Abfallmaterials. Die Leistungsfähigkeit der Windsichter hängt jedoch von der Breitenverteilung des Abfallmaterials ab, so dass die unter vorgegebenen Bedingungen realisierbaren Windsichter-Anlagen in ihrer Leistungsfähigkeit eingeschränkt und dementsprechend vergleichsweise unwirtschaftlich ausgeführt werden können.

Der Erfindung liegt die Aufgabe zugrunde, eine in der Abfallwirtschaft einsetzbare Verteilervorrichtung anzugeben, welche eine hohe Durchsatzleistung einer Sichtanlage bei kompakten baulichen Abmessungen dieser Sichtanlage ermöglicht.

Diese Aufgabe wird durch eine Verteilervorrichtung nach Anspruch 1 gelöst.

Die Erfindung schlägt mit anderen Worten eine Verteilervorrichtung vor, bei der die Verteilung des Abfalls mittels zweier Drehteller erfolgt. Die Drehteller sind jeweils drehangetrieben und schleudern somit den Abfall, der auf sie auftrifft, teilweise nach vorne, teilweise aber auch seitlich nach außen, so dass der Abfall mittels dieser Drehteller auf eine größere Breite verteilt wird. Die zwei Drehteller sind gegenläufig angetrieben, so dass eine Verteilung nach beiden Seiten auswärts erreicht wird und somit die Verteilung des Abfalls von einer ersten auf eine viel größere zweite Breite ermöglicht wird.

Die Drehteller sind muldenförmig konkav geformt zur Erzielung optimaler Verteilergebnisse.

Die zwei Drehteller sind in unterschiedlicher Höhe angeordnet sowie in der Art, dass sie sich teilweise überlappen. Durch die Überlappung wird sichergestellt, dass sämtlicher Abfall vom ersten Förderorgan auf die Verteilervorrichtung fällt, also auf die beiden Drehteller, so dass eine zuverlässige Aufnahme des vom ersten Förderorgan herab fallenden Materialstroms sichergestellt wird. Diese Anordnung ist vorteilhaft gegenüber einer beispielsweise sich nur punktuell berührenden Anordnung der beiden Drehteller, welche dann vergleichsweise große Zwickel frei ließe, so dass nicht auszuschließen wäre, dass in diese Zwickel Abfall fallen könnte, ohne von den Drehtellern erfasst zu werden.

Bei einer Abfall-Sortieranlage, in welcher eine vorschlagsgemäße Verteilervorrichtung verwendet wird, kann an das erste Förderorgan eine Schütte anschließen, welche den Abfall auf die Drehteller übergibt. Wenn das erste Förderorgan beispielsweise als Förderband ausgestaltet ist, welches an seinem Ende um eine Umlenkrolle umgelenkt ist, so würde sich vom Obertrum des Förderbandes eine Fallhöhe des Abfalls auf die Drehteller ergeben, die durch den Durchmesser der Umlenkrolle beeinflusst ist. Im Vergleich dazu kann durch die an das erste Förderorgan anschließende Schütte eine Führung des Abfalls bewirkt werden, die bis knapp über die Drehteller reicht, so dass die Fallhöher verringert und eine möglichst präzise Übergabe des Abfallstroms auf die Verteilvorrichtung bewirkt wird, da mit Hilfe der Schütte der freie Flug des Abfalls vom Förderband auf die Verteilvorrichtung deutlich reduziert werden kann.

Zudem kann vorgesehen sein, dass eine derartige Schütte nicht nur die Wegstrecke zwischen dem Abgabeende des Förderbandes und den Drehtellern überbrückt, sondern überraschend auch hinsichtlich der Breite des Abfallstroms eine Bündelung des Abfalls bewirkt, so dass der Abfall ggf. mit einer noch geringeren Breite auf die Verteilvorrichtung übergeben wird als es der Breite des Abfallstroms auf dem ersten Förderorgan entspricht. Dies ist insofern überraschend, als die Abfallmischung ja auf eine größere Breite verteilt werden soll. Durch die erwähnte Bündelung kann jedoch mit Hilfe der Schütte sehr präzise eingestellt werden, auf welche Oberflächenbereiche der Drehteller der Abfallstrom gelenkt wird, so dass hierdurch die Verteileigenschaften der Verteilvorrichtung und dementsprechend die Verteilung der Abfallmischung sehr präzise beeinflusst werden kann.

Vorteilhaft kann die Neigung der Drehteller einstellbar sein, also die Ausrichtung ihrer Drehachsen im Verhältnis zur Vertikalen, so dass die Drehteller wahlweise um eine vertikale Drehachse drehend ausgerichtet sein können oder bewusst eine von der vertikalen abweichende Neigung der Drehteller eingestellt werden kann. Durch diese Einstellbarkeit kann ebenfalls die Verteilung der Abfallmischung beeinflusst werden.

Die mit Hilfe der Verteilvorrichtung auf eine deutlich größere Breite verteilte Abfallmischung kann auf die obere und die dem ersten Förderorgan zugewandte Seite der Sichttrommel auftreffen, wenn die Abfall-Sortieranlage z. B. als Windsichter ausgestaltet ist. Auf eine derartige Ausgestaltung der Abfall-Sortieranlage wird nachfolgend als Beispielsanwendung einer vorschlagsgemäßen Verteilvorrichtung wiederholt Bezug genommen. Dabei ist z. B. folgende Ausgestaltung der Abfall-Sortieranlage möglich: die Abfallmischung wird mittels eines ersten Förderorgans, z. B. eines Förderbandes, zu der Verteilvorrichtung transportiert und von dieser auf eine größere Breite verteilt. Der Verteilvorrichtung ist eine Sichttrommel nachgeschaltet, wobei die Abfallmischung auf die Außenseite der Sichttrommel aufgegeben wird. Zwischen dem ersten Förderorgan und der Sichttrommel ist eine Blaseinrichtung angeordnet, deren Luftstrom von unten gegen den Bereich der Sichttrommel gerichtet ist, auf den die Abfallmischung trifft. Die Drehrichtung der Sichttrommel stimmt mit der Blasrichtung des Luftstroms dort überein, wo der Luftstrom auf den Umfang der Sichttrommel trifft. Durch die Blaseinrichtung unterstützt werden die leichteren Bestandteile der Abfallmischung oben gehalten, so dass sie mit der Sichttrommel transportiert werden, während demgegenüber schwerere Anteile der Abfallmischung entgegen der Drehrichtung der Sichttrommel nach unten fallen.

Der Oberfläche der Sichttrommel kann ein Band anliegen. Dies kann erstens einen Verschleißschutz für die Sichttrommel selbst bilden, zweitens kann vorteilhaft eine schalldämmende Wirkung erzielt werden, wenn beispielsweise harte Materialien auf eine ansonsten ungedämpfte metallische Sichttrommel auftreffen würden. Dabei kann das Band der Sichttrommel eng anliegen. Es kann jedoch alternativ auch vorzugsweise vorgesehen sein, dass dieses Band als Förderband ausgestaltet ist, so dass die Sichttrommel quasi eine Umlenktrommel dieses Förderbandes bildet. Auf diese Weise kann auch bei vergleichsweise kleinem Trommeldurchmesser ein Abtransport der über den Zenit der Sichttrommel gelangten leichteren Bestandteile der Abfallmischung zu einer Stelle erfolgen, die vergleichsweise weit von der Sichttrommel entfernt ist, so dass auf diese Weise Gelegenheit besteht, der eigentlichen Sichttrommel nachgeschaltet beispielsweise eine weitere Sortierstufe für die Abfallsortierung unterzubringen.

Der Windsichter kann sozusagen in Reihe angeordnet sein, so dass beispielsweise in an sich bekannter Weise die Drehachse der Sichttrommel quer zur Förderrichtung des ersten Förderorgans ausgerichtet ist. Der Materialstrom hingegen verläuft gleichmäßig in einer Richtung, nämlich zunächst in Förderrichtung des ersten Förderorgans, beispielsweise eines Förderbandes, und anschließend über die Sichttrommel hinweg weiter in der ursprünglichen Richtung, wobei lediglich die schwereren Materialanteile an der Sichttrommel nach unten fallen.

Gegenüber dieser Reihenanordnung kann eine wesentlich kompaktere Ausgestaltung des Windsichters mit einer geringeren Baulänge verwirklicht werden, wenn die Drehachse der Sichttrommel längs zur Förderrichtung des ersten Förderorgans ausgerichtet ist, beispielsweise parallel zu einem ersten Zuförderband ausgerichtet ist. Die Materialverteilung mit Hilfe der Drehteller ermöglicht problemlos auch bei einer derartigen Konfiguration die Verteilung der Abfallmischung auf eine gewünschte große Breite der Sichttrommel.

So kann vorteilhaft eine Verbreiterung der Abfallmischung auf die vier- bis sechsfache Breite gegenüber dem ersten Förderorgan erfolgen.

In an sich bekannter Ausgestaltung des Windsichters kann vorgesehen sein, dass die Abfallmischung von einem Band als Förderorgan auf die Sichttrommel aufgegeben werden kann. Dieses Band wird im Rahmen des vorliegenden Vorschlags als Breitband bezeichnet, denn es stellt ein zweites Förderorgan dar, auf welches die Verteilvorrichtung die von dem ersten Förderorgan zugeförderten Anteile zu einer größeren Breite verteilt hat. Bei einer zylindrischen Ausgestaltung der Sichttrommel ist durch ein Förderband als zweites Förderorgan sichergestellt, dass sämtliche Materialanteile im selben Umfangsbereich auf die Sichttrommel auftreffen, beispielsweise auf den bevorzugten Umfangsquadranten, der zwischen dem Zenit und dem dem Zuförderorgan zugewandten Äquator der Sichttrommel liegt. Alternativ zu der Verwendung des vorbeschriebenen Breitbandes kann zu Gunsten besonders kompakter baulicher Abmessungen des Windsichters vorgesehen sein, dass die Abfallmischung, die vom ersten Förderorgan auf die Verteilvorrichtung trifft, ohne Zwischenschaltung eines zweiten Förderorgans auf die Sichttrommel verteilt wird. Der dabei realisierbare Raumgewinn ist unmittelbar ersichtlich. Problematisch kann sein, dass die unterschiedlich langen Flugbahnen, welche die einzelnen Anteile der Materialmischung von der Verteilvorrichtung bis zur Oberfläche der Sichttrommel zurücklegen dazu führen können, dass sich die Materialmischung über einen unerwünscht großen Umfangsbereich der Sichttrommel verteilt. Daher kann vorteilhaft vorgesehen sein, dass die Verteilvorrichtung die Abfallmischung höher als ursprünglich beabsichtigt verteilt, so dass auf diese Weise sichergestellt ist, dass auch die Anteile der Abfallmischung mit der längsten Flugbahn, die also den niedrigsten Auftreffpunkt auf der Sichttrommel haben werden, in dem gewünschten Umfangsbereich auf die Sichttrommel auftreffen. Für die anderen, demgegenüber zu hoch verteilten Anteile der Abfallmischung ist in diesem Fall vorteilhaft oberhalb der Sichttrommel ein Prallelement angeordnet, welches dort auftreffende Anteile der Abfallmischung nach unten und gegen die Sichttrommel lenkt. Das Prallelement kann als aufrecht ausgerichtetes Prallblech bzw. aus Ketten o. dgl. bestehender Prallvorhang ausgestaltet sein, der durch seine Nachgiebigkeit ein unerwünschtes Zurückschleudern der auftreffenden Abfallanteile verhindert. Alternativ kann das Prallelement als liegend ausgerichtete und ggf. drehangetriebene Prallwalze ausgestaltet sein, die den auftreffenden Anteilen der Abfallmischung die gewünschte Richtungsumkehr vermittelt. Schließlich kann das Prallelement vorteilhaft als gewogenes Führungsblech ausgestaltet sein, so dass keine Reflektionen oder Rückpraller der gegen das Prallelement auftreffenden Anteile der Abfallmischung zu befürchten sind, sondern die Anteile der Materialmischung gegen das Führungsblech verteilt und dann von diesem umgelenkt werden und auf den gewünschten Trommelumfang der Sichttrommel gelenkt werden.

Ausführungsbeispiele eines Windsichters, der mit einer vorschlagsgemäßen Verteilvorrichtung ausgestattet ist, werden anhand der rein schematischen Darstellungen nachfolgend näher erläutert. Dabei zeigt
- Fig. 1: eine Seitenansicht auf einen Windsichter,
- Fig. 2: eine Draufsicht auf den Windsichter von Fig. 1,
- Fig. 3: eine schematische Seitenansicht auf ein zweites Ausführungsbeispiel mit einem Prallelement,
- Fig. 4 u. 5: zwei weitere Ausführungsbeispiele in Seitenansicht,
- Fig. 6: eine Draufsicht auf das Ausführungsbeispiel von Fig. 3, und
- Fig. 7: in einer Prinzipdarstellung Flugbahnen von Anteilen der Abfallmischung beim Ausführungsbeispiel der Fig. 6.

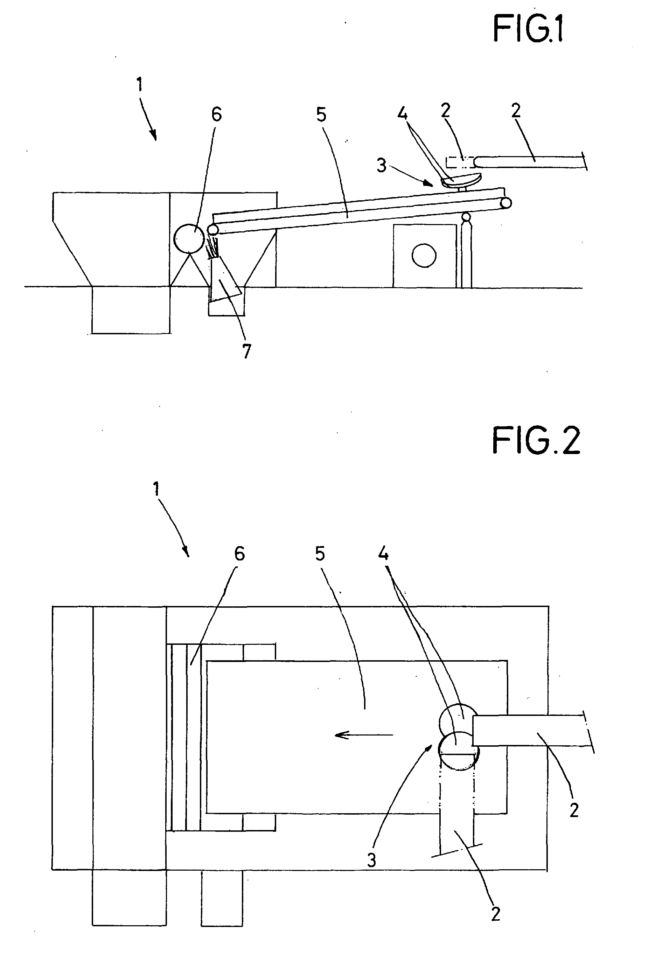

In Fig. 1 ist die prinzipielle Anordnung eines Windsichters 1 dargestellt: Ein erstes Zuführorgan 2 ist als Förderband ausgestaltet, wobei in Fig. 1 alternativ zwei Ausrichtungen des Förderbandes angedeutet sind, so dass aus diesem Grund zweimal das erste Förderorgan 2 in der Zeichnung vorgesehen ist, wobei auf die beiden unterschiedlichen Alternativen später näher eingegangen werden wird.

Vom ersten Förderorgan 2 mit einer vergleichsweise schmalen Bandbreite von beispielsweise 500 mm gelangt die Abfallmischung auf eine Verteilvorrichtung 3, die, wie insbesondere aus Fig. 2 ersichtlich ist, zwei Drehteller 4 umfasst. Von der Verteilvorrichtung 3 wird die Abfallmischung auf ein zweites Förderorgan, welches als Breitband 5 bezeichnet ist, verteilt und von diesem Breitband 5 wird die nun breit verteilte Abfallmischung auf eine Sichttrommel 6 übergeben. Der Abstand zwischen dem Breitband 5 und der Sichttrommel 6 sowie die Laufgeschwindigkeit des Breitbandes 5 sind in Anpassung an das Abfallmaterial derart eingestellt, dass die Abfallmischung im oberen rechten Quadranten, bezogen auf die Blickrichtung in Fig. 1, auf die Sichttrommel 6 auftrifft, also auf den Trommelumfang der Sichttrommel 6, der zwischen seiner obersten Stelle, also dem Zenit, und der am weitesten nach rechts, zum Breitband 5, weisenden Stelle, also seinem dortigen Äquator, befindlich ist.

Eine schematisch angedeutete Blaseinrichtung 7 ist zwischen dem Ende des Breitbandes 5 und der Sichttrommel 6 angeordnet. Die Sichttrommel 6 dreht sich, bezogen auf die Blickrichtung von Fig. 1, gegen den Uhrzeigersinn, so dass dort, wo der Luftstrom aus der Blaseinrichtung 7 auf den Trommelumfang der Sichttrommel 6 trifft, die Bewegungsrichtung der Sichttrommel 6 und die Blasrichtung des Luftstroms etwa gleichgerichtet sind, und jedenfalls nicht gegenläufig sind.

Wie aus Fig. 2 ersichtlich ist, weist das Breitband 5 eine deutlich größere Breite auf als das erste Förderorgan 2. Zudem ist aus Fig. 2 ersichtlich, dass mit Hilfe der vorschlagsgemäß verwendeten Verteilvorrichtung 3 die Zuführung des ersten Förderorgans 2 entweder in Reihe erfolgen kann, also in derselben Förderrichtung wie sie das Breitband 5 aufweist, oder quer dazu.

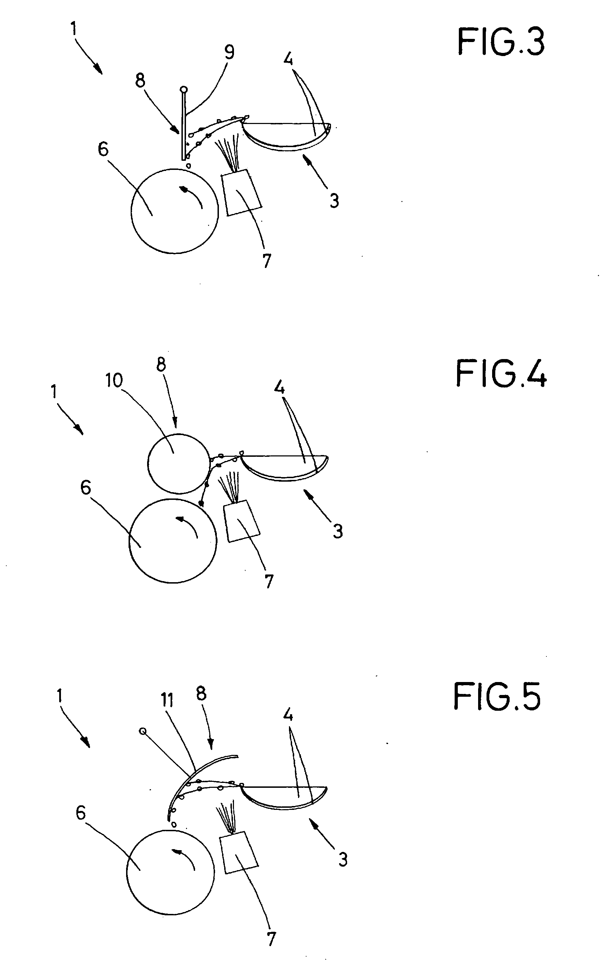

Fig. 3 zeigt ein zweites Ausführungsbeispiel eines Windsichters 1, wobei hier lediglich einige wesentliche Elemente des Windsichters 1 dargestellt sind. Es ist insbesondere ersichtlich, dass die Aufgabe der Abfallmischung von der Verteilvorrichtung 3 nicht über ein Breitband oder ein anderes nachgeschaltetes Förderorgan erfolgt, sondern dass grundsätzlich die Abfallmischung unmittelbar von der Verteilvorrichtung 3 auf die Sichttrommel 6 aufgegeben wird.

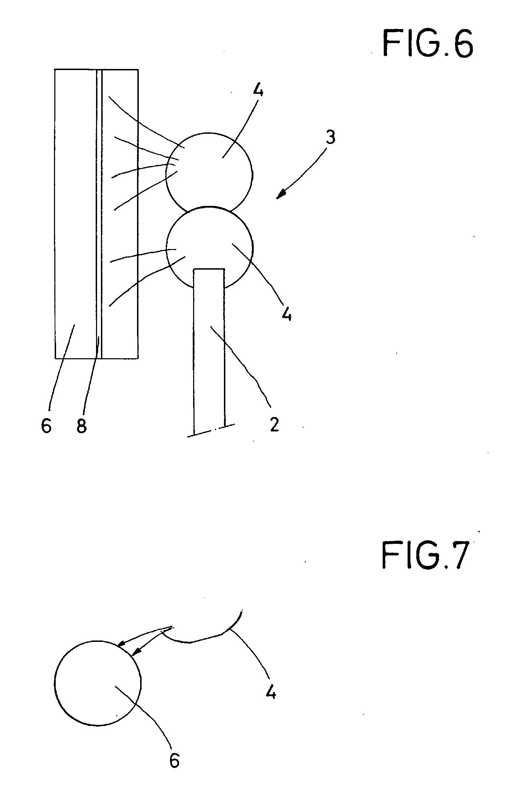

Fig. 6 verdeutlicht diese Situation: Die Verteilvorrichtung 3 mit ihren beiden Drehtellern 4 ist etwa mittig vor der Sichttrommel 6 angeordnet. Hierdurch ergeben sich allerdings, wie durch die angedeuteten gebogenen Linien verdeutlicht ist, unterschiedlich lange Flugbahnen für die einzelnen Anteile der Abfallmischung von der Verteilvorrichtung 3 auf die Sichttrommel 6. Diese unterschiedlichen Flugbahnen führen, wie Fig. 7 verdeutlicht, je nach Länge der Flugbahn zu unterschiedlichen Auftreffpunkten des Abfalls auf die Oberfläche der Sichttrommel 6. Aus diesem Grund ist in Fig. 3 die Verteilvorrichtung 3 derart ausgerichtet, dass, wie die dort angedeuteten Flugbahnen verdeutlichen, etliche oder sogar sämtliche Anteile der Abfallmischung über die Sichttrommel 6 hinweg verteilt würden. Aus diesem Grund ist in den Flugweg der Abfallmischung ein Prallelement 8 eingebracht, welches bei dem dargestellten Ausführungsbeispiel als Prallvorhang 9 ausgestaltet ist. Das Prallelement 8 könnte als starres Blech ausgestaltet sein, ein Prallvorhang 7 aus Ketten, aus einem Kunststoffbehang o. dgl., weist jedoch den Vorteil auf, kinetische Energie der auftreffenden Abfallstücke zu absorbieren, so dass diese dann regelrecht am Prallvorhang 9 herabtropfen und auf den vorteilhaft gewünschten Quadranten des Trommelumfangs der Sichttrommel 6 auftreffen.

Fig. 4 zeigt ein Ausführungsbeispiel ähnlich dem der Fig. 3, wobei das Prallelement 8 in diesem Fall als Prallwalze 10 ausgestaltet ist, die liegend ausgerichtet und etwa achsparallel zur Sichttrommel 6 oberhalb von dieser angeordnet ist.

Eine weitere Alternative zeigt Fig. 5: Dort ist das Prallelement 8 als gebogenes Führungsblech 11 ausgestaltet, welches auftreffende Abfall-Anteile umlenkt und gegen den gewünschten Umfangsabschnitt der Sichttrommel 6 führt. In dem Auftreffpunkt, wo die Abfall-Anteile auf das Führungsblech 11 auftreffen, ist das Führungsblech 11 sowohl gegenüber der Vertikalen als auch der Horizontalen schräg ausgerichtet. Alternativ zu diesem gebogenen Führungsblech 11 könnte daher ein Prallelement vorgesehen sein, welches geradlinig, jedoch entsprechend schräg ausgerichtet ist, um die Abfall-Anteile auf die Sichttrommel 6 zu lenken.

## Patentansprüche

1. Verteilvorrichtung (3), die zwischen einem ersten Förderorgan (2), welches eine Abfallmischung führt, und einer ihrnachgeschalteten Einrichtung anordbar ist, auf welche die Abfallmischung aufzugeben ist,
wobei die Verteilvorrichtung (3) wenigstens einen liegend angeordneten, drehangetriebenen Drehteller (3) aufweist,
und derart ausgestaltet ist, dass sie die von dem ersten Förderorgan (2) auftreffenden Anteile der Abfallmischung über eine größere Breite verteilt als diese auf dem ersten Förderorgan (2) einnehmen,
wobei die Verteilvorrichtung (3) zwei liegend angeordnete, gegenläufig drehende Drehteller (4) aufweist, welche auftreffende Anteile der Abfallmischung in Förderrichtung des ersten Förderorgans (2) nach vorn und in seitlicher Richtung nach außen verteilen,
die Drehteller (4) in unterschiedlicher Höhe angeordnet sind und sich ein erster Drehteller (4) bereichsweise über den zweiten Drehteller (4) erstreckt
und die Drehteller (4) jeweils muldenförmig konkav geformt sind.

2. Verteilvorrichtung nach Anspruch 1,
**dadurch gekennzeichnet,**
**dass** die Ausrichtung der Drehteller (4) im Verhältnis zur Vertikalen einstellbar ist.

## Claims

1. Distribution device (3) that can be disposed between a first conveyor member (2), which conveys a refuse mixture and a member placed downstream of the distribution device onto which member the refuse mixture can be deposited,
where the distribution device (3) incorporates one or more horizontally disposed rotary plates (4),
and is constructed so as to distribute over a greater width the portions of refuse mixture reaching it from the first conveyor member (2) than these take up on the first conveyor member (2),
where the distribution device (3) incorporates two horizontally disposed, contra-rotating rotary plates (4) which distribute forwards in the direction of conveyance of the first conveyor member (2) and outwards in a lateral direction parts of the refuse mixture reaching them,
the rotary plates (4) are disposed at different heights and that a first rotary plate (4) extends partly over a second rotary plate (4).
and the rotary plates (4) are each shaped concave in the form of troughs.

2. Distribution device in accordance with claim 1, **characterised in that**
that the orientation of the rotary plates (4) can be adjusted relative to the vertical.

## Revendications

1. Dispositif répartiteur (3) qu'il est possible d'agencer entre un premier organe convoyeur (2) conduisant un mélange de déchets et un équipement placé en aval de ce dispositif, équipement sur lequel il faut charger le mélange de déchets,
sachant que le dispositif répartiteur (3) présente au moins un plateau tournant (4) agencé à l'horizontale et entraîné en rotation,
et qu'il est configuré de sorte à répartir les parts du mélange de déchets, qui arrivent du premier organe convoyeur (2), sur une largeur supérieure à celle que ces parts occupent sur le premier organe convoyeur (2),
sachant que le dispositif répartiteur (3) présente deux plateaux tournants contrarotatifs (4) agencés à l'horizontale qui, dans le sens de convoyage du premier organe convoyeur (2), répartissent vers l'avant et latéralement vers l'extérieur les parts du mélange de déchets qui sont en train d'arriver,
que les plateaux tournants (4) sont agencés à des hauteurs différentes et qu'un premier plateau tournant (4) s'étend en partie au dessus du deuxième plateau tournant (4),
et que les plateaux tournants (4) sont modelés chacun de forme concave en auge.

2. Système de meuble rembourré selon la revendication 1, **caractérisé en ce que**,
**caractérisé en ce que** l'orientation des plateaux tournants (4) est réglable par rapport à la verticale.
